# EUROPEAN PATENT APPLICATION

(11) **EP 2 874 446 A1**
(43) Date of publication of application: **20.05.2015**
(21) Application number: 13817131.9
(22) Date of filing: 09.06.2013
(51) Int. Cl.: H04W 52/14

(54) **METHOD, USER EQUIPMENT AND NETWORK EQUIPMENT FOR POWER CONTROL**

(30) Priority: 12.07.2012 CN 201210241181
(71) Applicant: Huawei Technologies Co., Ltd., Longgang District Shenzhen, Guangdong 518129 (CN)
(72) Inventor: XING, Pingping, Shenzhen Guangdong 518129 (CN)
(74) Representative: Körber, Martin Hans
(86) International application number: PCT/CN2013/077064
(87) International publication number: WO 2014/008796

(57) **Abstract**

The embodiments of the present invention disclose a method, user equipment and network equipment for power control. The method comprises: the user equipment (UE) obtains an aggregate uplink transmission power parameter value, wherein the aggregate uplink transmission power parameter value is the power parameter value of the UE when the UE accesses at least two systems simultaneously; controlling, according to the aggregate uplink transmission power parameter value, the power of UE when it accesses the at least two systems. Because the aggregate uplink transmission power parameter value which refers to the control parameter of the total transmission power of the at least two system is obtained in the embodiments of the present invention, thus uplink power control according to the aggregate uplink transmission power parameter value not only ensure the transmission power of UE to each system, but also avoid excessive radiation of the UE and ensure the quality of service (QoS) characteristics of service.

## Description

This application claims priority to Chinese patent application No. 201210241181.8 titled "METHOD, UE AND NETWORK EQUIPMENT FOR POWER CONTROL" and filed with the Chinese State Intellectual Property Office on July 12, 2012, which is incorporated herein by reference in its entirety.

### TECHNICAL FIELD

The present invention relates to the field of communication technology, and in particular to a method, user equipment and network equipment for power control.

### BACKGROUND

Current second generation communication system such as GSM (Global System of Mobile communication, Global System of Mobile communication) and third generation communication system such as WCDMA (Wideband Code Division Multiple Access, Wideband Code Division Multiple Access) system have been widely deployed in many areas. With the development of communication technology, LTE (Long Term Evolution, Long Term Evolution) system, as a new generation evolution network, has covered some urban areas and telephone traffic hotspots. Therefore, the LTE system, 2G system and 3G system may simultaneously exist in some areas, and these systems may coexist in a macro-micro networking way, i.e., networking is implemented by cells with different coverage ranges, such as a macrocell and a microcell.

Different communication systems have different cell coverage ranges and different service QoS (Quality of Service, Quality of Service). For example, GSM communication system has a large coverage range and supports voice service and LTE system can provide hotspot packet data service, UE may access both the two communication systems simultaneously, with voice service being provided by GSM system and data service of high throughput being provided by LTE system, thus user experience of UE is improved.

The inventor found that, in the conventional condition, in order to suppress radiation of UE (User Equipment, User Equipment), transmission power of UE to a single communication system is specified, so as to ensure radiation of UE is not excessive under the transmission power. However, in a case that the UE accesses two or more communication systems simultaneously, radiation of the UE may be excessive if transmission power of the UE to each communication system is ensured; and QoS of the service may be influenced due to insufficient transmission power of the UE to each communication system if total transmission power of the UE to all the communication systems is limited to suppress radiation of the UE.

### SUMMARY

It is provided a method, user equipment and network equipment for power control according to embodiments of the invention, to address the conventional problem that it is difficult to control power effectively when the UE accesses multiple communication systems.

In order to address the above technical problem, following technical solutions are disclosed according to embodiments of the invention.

Disclosed is a method for power control, including:
obtaining, by an user equipment UE, a parameter value of aggregate uplink transmission power, where the parameter value of the aggregate uplink transmission power is a power parameter value of the UE in a case that the UE accesses at least two systems simultaneously; and
controlling, based on the parameter value of the aggregate uplink transmission power, power at which the UE accesses the at least two systems.

Disclosed is a method for power control, including:
obtaining, by a network equipment, a parameter value of aggregate uplink transmission power, wherein the parameter value of the aggregate uplink transmission power is a power parameter value of an UE in a case that the UE accesses at least two systems simultaneously; and
controlling, based on the parameter value of the aggregate uplink transmission power, power at which the UE accesses the at least two systems.

Disclosed is an UE for power control, including:
a first obtaining unit, configured to obtain a parameter value of aggregate uplink transmission power, where the parameter value of the aggregate uplink transmission power is a power parameter value of the UE in a case that the UE accesses at least two systems simultaneously; and
a first control unit, configured to control, based on the parameter value of the aggregate uplink transmission power, power at which the UE accesses the at least two systems.

Disclosed is a network equipment for power control, including:
a second obtaining unit, configured to obtain a parameter value of aggregate uplink transmission power, where the parameter value of the aggregate uplink transmission power is a power parameter value of an UE in a case that the UE accesses at least two systems simultaneously; and
a second control unit, configured to control, based on the parameter value of the aggregate uplink transmission power, power at which the UE accesses the at least two systems.

According to embodiments of the invention, power at which the UE accesses at least two systems is controlled, and power at which the UE accesses the at least two systems is controlled based on a parameter value of aggregate uplink transmission power after obtaining the parameter value of the aggregate uplink transmission power, whether at the UE side or at the network equipment side. According to embodiments of the invention, the parameter value of the aggregate uplink transmission power is obtained, with the parameter value of the aggregate uplink transmission power being a control parameter of total transmission power for the at least two systems, therefore, uplink power control based on the parameter value of the aggregate uplink transmission power may not only ensure transmission power of UE to each of the systems, but also avoid excessive radiation of UE and ensure QoS characteristics of service.

### BRIEF DESCRIPTION OF THE DRAWINGS

The drawings illustrating the embodiments or the conventional technology will be described briefly as follows, to make the technical solutions according to the embodiments of the present disclosure or the technical solutions according to the conventional technology clearer. It is obvious that other drawings may be obtained by those skilled in the art according to these drawings without any creative work.
Figure 1A is a schematic diagram of a network architecture applied to embodiments of the invention;
Figure 1B is a schematic diagram of connection between RATs of Figure 1A and an MRPC module;
Figure 2 is a flowchart of a first embodiment of a method for power control according to the invention;
Figure 3 is a flowchart of a second embodiment of a method for power control according to the invention;
Figure 4 is a flowchart of a third embodiment of a method for power control according to the invention;
Figure 5 is a flowchart of a fourth embodiment of a method for power control according to the invention;
Figure 6 is a flowchart of a fifth embodiment of a method for power control according to the invention;
Figure 7 is a flowchart of a sixth embodiment of a method for power control according to the invention;
Figure 8 is a flowchart of a seventh embodiment of a method for power control according to the invention;
Figure 9 is a flowchart of an eighth embodiment of a method for power control according to the invention;
Figure 10 is a block diagram of a first embodiment of UE according to the invention;
Figure 11 is a block diagram of a second embodiment of UE according to the invention;
Figure 12 is a block diagram of a first embodiment of network equipment according to the invention;
Figure 13 is a block diagram of a second embodiment of network equipment according to the invention; and
Figure 14 is a block diagram of a third embodiment of network equipment according to the invention.

### DESCRIPTION OF EMBODIMENTS

According to the following embodiments of the invention, it is provided a method for power control, UE for power control, and network equipment for power control. The power control in the embodiments of the invention refers to a control for uplink power of UE which accesses at least two systems, to coordinate a relationship between transmission power of the UE to each of the systems and total transmission power of the UE to all of the systems.

In order to make those skilled in the art have a better understand to the technical solutions of the embodiments of the invention, and make the forgoing objects, features and advantages of the embodiments of the invention be more obvious and easy to be understood, the technical solutions of the embodiments of the invention are explained below in more details in conjunction with the drawings.

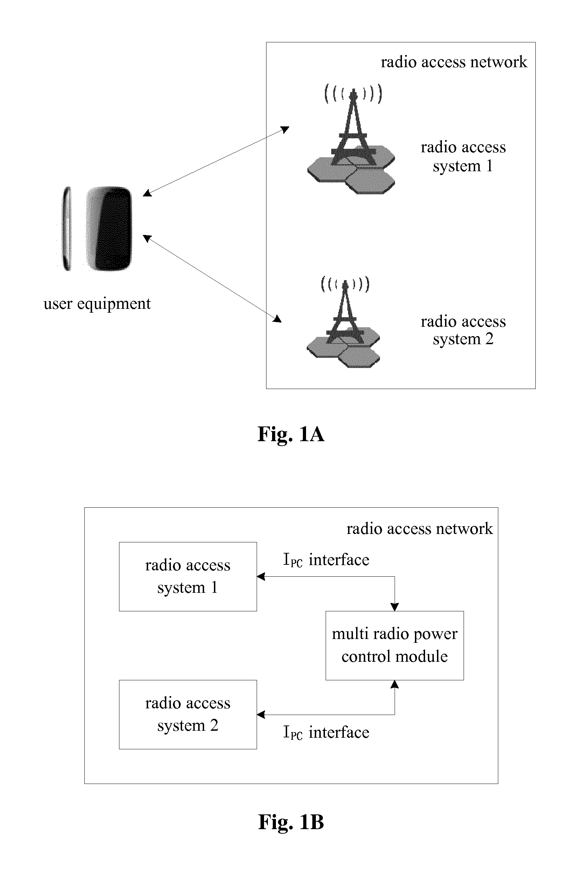

Reference is made to Figure 1A, which is a schematic diagram of a network architecture applied to the embodiments of the invention.

In Figure 1A, for example, the network side is collectively referred to as RAN (Radio Access Network, Radio Access Network). The RAN includes at least two RATs (Radio Access Technology, Radio Access Technology) which represent access systems independent from each other logically, and each of the RATs represents a RAN of a communication system. The RAT includes entities of a RNC (Radio Network Controller, Radio Network Controller) and a NB (NodeB, base station) if the RAT is UMTS (Universal Mobile Telecommunications System, Universal Mobile Telecommunications System); and the RAT includes entities of a BSC (Base Station Controller, Base Station Controller) and a BTS (Base Transceiver Station, Base Transceiver Station) if the RAT is GSM; and the RAT includes an entity of an eNB if the RAT is LTE.

For convenient illustration, only two access systems RAT1 and RAT2 are shown in Figure 1A, where UE accesses RAT1 and RAT2 simultaneously. The RAT1 and RAT2 may be two devices arranged to be separate physically, or the RAT1 and RAT2 may be a single RAN device, for example, the RAT1 and RAT2 are two boards arranged on a same motherboard.

According to the embodiment of the invention, the network side including multiple access systems may implement information interaction with the UE side by setting an MRPC (Multi Radio Power Control) module which may be arranged independently or may be integrated into any one of the RATs; in the embodiment of the invention, the entity into which the MRPC module is integrated is referred to as network equipment. Referring to Figure 1B, which is a schematic diagram of connection between RATs of Figure 1A and an MRPC module, the MRPC may be connected to the RAT1 and RAT2 through Ipc interfaces. Similarly, the UE side may be arranged with an MRPC module for information interaction with the network side.

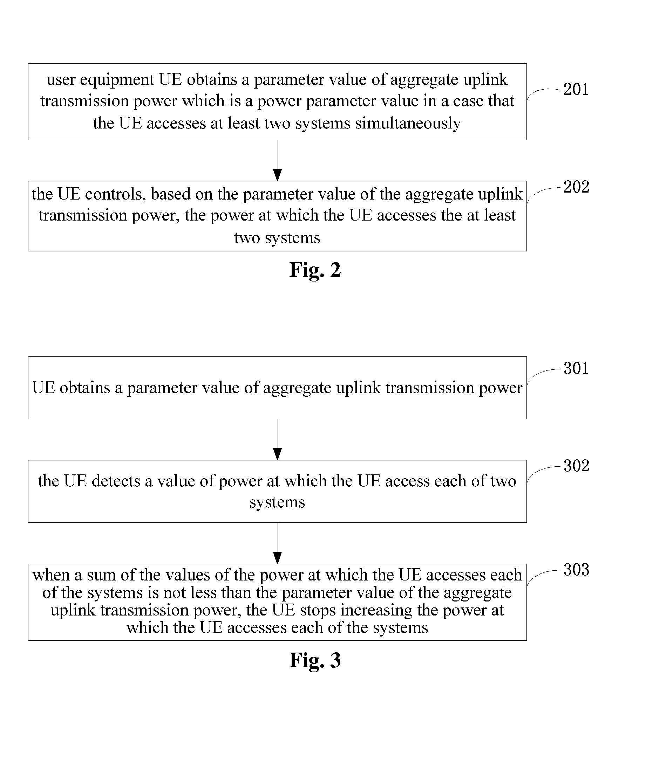

Referring to Figure 2 which is a first embodiment of a method for power control according to the invention, a process of power control at a UE side is shown.

In step 201, the UE obtains a parameter value of aggregate uplink transmission power, where the parameter value of the aggregate uplink transmission power is a power parameter value of the UE in a case that the UE accesses at least two systems simultaneously.

The UE may configure aggregate maximum output power as the parameter value of the aggregate uplink transmission power based on uplink maximum output power for accessing each of the at least two systems, with the aggregate maximum output power being not less than a maximum value of the uplink maximum output power for all of the systems and is not greater than a sum of the uplink maximum output power for all of the systems. The aggregate maximum output power may be RF (Radio Frequency, Radio Frequency) capability of the UE, that is, the aggregate maximum output power may be an aggregate maximum output power level and different levels are configured to correspond to different power value; for example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

Alternatively, the UE may receive aggregate maximum allowed transmission power which is configured for the UE by the network equipment as the parameter value of the aggregate uplink transmission power.

Alternatively, the UE may configure the aggregate maximum output power based on uplink maximum output power for accessing each of the systems, with the aggregate maximum output power being not less than a maximum value of the uplink maximum output power for all of the systems and not greater than a sum of the uplink maximum output power for all of the systems, and the UE also receives aggregate maximum allowed transmission power which is configured for the UE by the network equipment. The UE selects a smaller one of the aggregate maximum output power and the aggregate maximum allowed transmission power and takes it as the parameter value of the aggregate uplink transmission power.

In step 202, the UE controls, based on the parameter value of the aggregate uplink transmission power, power at which the UE accesses the at least two systems.

The UE may detect a value of power at which the UE accesses each of the at least two systems, and in a case that a sum of the values of the power at which the UE accesses each of the systems is not less than the parameter value of the aggregate uplink transmission power, the UE stops increasing the power at which the UE accesses each of the systems.

Further, in a case that the UE also obtains a power control priority which is configured for the different systems by the network equipment or the UE, the UE may control the power at which the UE accesses the at least two systems based on the parameter value of the aggregate uplink transmission power and the power control priority. Specifically, the UE detects the value of the power at which the UE accesses each of the at least two systems; and when a sum of the values of the power at which the UE accesses each of the systems is not less than the parameter value of the aggregate uplink transmission power, the UE increases, in an order of the power control priority from high to low, the power at which the UE accesses a preset number of systems having higher priorities and meanwhile stops increasing or reduces the power at which the UE accesses other systems rather than the preset number of systems having the higher priorities, with the sum of the values of the power at which the UE accesses each of the systems being not greater than the parameter value of the aggregate uplink transmission power.

It can be seen from the above embodiment that, the UE obtains the parameter value of the aggregate uplink transmission power which is a control parameter of total transmission power for the at least two systems, therefore, uplink power control performed by the UE based on the parameter value of the aggregate uplink transmission power may not only ensure transmission power of the UE to each of the systems, but also avoid excessive radiation of the UE and ensure QoS characteristics of service.

A process of the power control performed at the UE side according to the invention is described in detail below in conjunction with the schematic diagram of the network architecture shown in Figure 1A, in which the UE accesses two systems.

Referring to Figure 3 which is a flowchart of a second embodiment of a method for power control according to the invention, it is shown a process in which the UE controls uplink power at which the UE accesses the two systems based on a parameter value of aggregate uplink transmission power.

In step 301, the UE obtains a parameter value of aggregate uplink transmission power.

The UE may obtain the parameter value of the aggregate uplink transmission power in any one of the following three ways.

In a first way, the UE may configure aggregate maximum output power (Aggregate Max Output Power) based on uplink maximum output power for accessing each of the systems, as the parameter value of the aggregate uplink transmission power.

In the conventional standard, the uplink maximum output power for accessing each of the systems is specified, and the aggregate maximum output power may be configured to be not less than the maximum one of all of the uplink maximum output power and not greater than a sum of all of the uplink maximum output power. For example, if the uplink maximum output power of the UE for accessing RAT1 is 24dBm and the uplink maximum output power of the UE for accessing RAT2 is 23dBm, the aggregate maximum output power may be configured to be 30dBm. The aggregate maximum output power may be an aggregate maximum output power level and different levels are configured to correspond to different power value; for example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

In a second way, the UE receives aggregate maximum allowed transmission power (Aggregate Max Allowed UL TX Power) which is configured for the UE by the network equipment, as the parameter value of the aggregate uplink transmission power.

In the conventional condition, each of the access systems may configure maximum allowed uplink transmission power for the UE. According to the invention, the network equipment may configure the aggregate maximum allowed transmission power according to deployment of cells corresponding each RATs in the network. For example, in a case that the network includes a macro cell of RAT1 and micro cells of RAT2, a sum of maximum allowed uplink transmission power for the macro cell and maximum allowed uplink transmission power for a micro cell may be configured as the aggregate maximum allowed transmission power.

Further, in a case that the network equipment also receives aggregate maximum output power configured by the UE, a smaller one of the aggregate maximum allowed transmission power configured described above and the aggregate maximum output power may be selected and taken as final aggregate maximum allowed transmission power. The network equipment sends the determined aggregate maximum allowed transmission power to the UE. Specifically, the UE may report a RF capability containing the aggregate maximum output power to the network equipment. In conjunction with the network architecture shown in Figure 1A, upon receipt of the RF capability, the RAT1 or RAT2 at the network side reports the RF capability to the network equipment where the MRPC is located, and the RF capability is stored by the network equipment.

The network equipment may send the aggregate maximum allowed uplink transmission power to the UE via the RAT1 or RAT2.

In a third way, the UE configures the aggregate maximum output power based on uplink maximum output power for accessing each of the systems and the UE also receives aggregate maximum allowed transmission power which is configured for the UE by the network equipment, then the UE selects a smaller one of the aggregate maximum output power and the aggregate maximum allowed transmission power and takes it as the parameter value of the aggregate uplink transmission power.

In the third way, the method for obtaining the aggregate maximum output power and the aggregate maximum allowed transmission power is the same as those described above in the first way and the second way, which is not repeated here. In the third way, after the UE obtains both the aggregate maximum output power and the aggregate maximum allowed transmission power, a smaller one of the aggregate maximum output power and the aggregate maximum allowed transmission power is selected and taken as the parameter value of the aggregate uplink transmission power.

In step 302, the UE detects a value of power at which the UE accesses each of the two systems.

At the beginning of accessing each system by the UE, the uplink transmission power of the UE to the system is increased gradually, and the UE has different uplink transmission power for accessing different systems. Therefore, the UE may detect at a preset time interval the uplink transmission power at which the UE accesses each of the systems, and a sum of values of power at which the UE currently accesses each of the systems may be obtained.

In step 303, when a sum of values of power at which the UE accesses each of the systems is not less than the parameter value of the aggregate uplink transmission power, the UE stops increasing the power at which the UE accesses each of the systems.

After the UE obtains the sum of the values of the power at which the UE accesses each of the systems currently, it is determined whether the sum of the values of the power at which the UE accesses each of the systems currently is not less than the parameter value of the aggregate uplink transmission power; if it is, the UE needs to limit the uplink transmission power, and in this case, the UE stops increasing the power at which the UE accesses each of the systems; and if it is not, the UE does not need to limit the uplink transmission power, and in this case, the UE continues to control individually the uplink transmission power for each of the systems.

It can be seen from the above embodiment that, the UE obtains the parameter value of the aggregate uplink transmission power which is a control parameter of total transmission power for the at least two systems, therefore, uplink power control performed by the UE based on the parameter value of the aggregate uplink transmission power may not only ensure transmission power of the UE to each of the systems, but also avoid excessive radiation of the UE and ensure QoS characteristics of service.

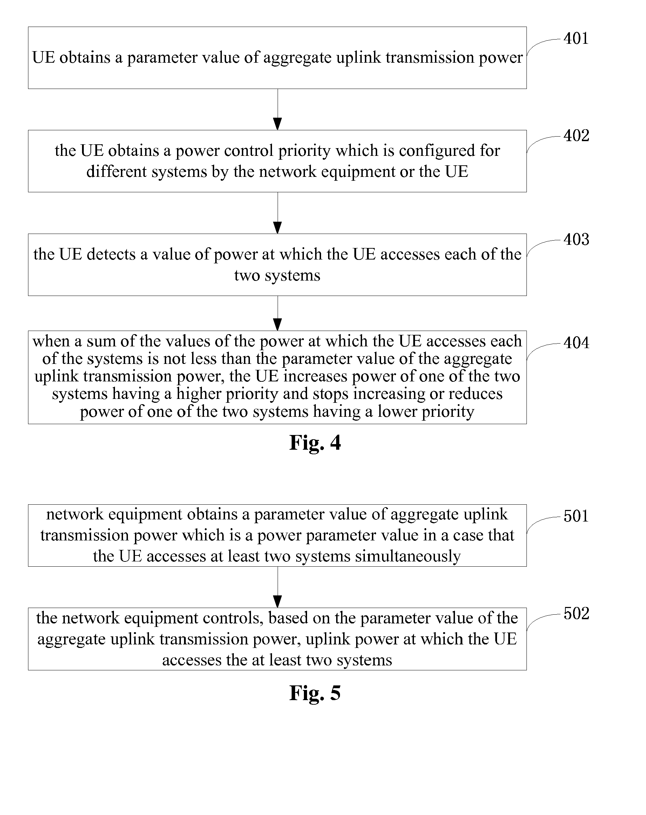

Referring to Figure 4 which is a flowchart of a third embodiment of a method for power control according to the invention, it is shown a process in which the UE controls, based on a parameter value of aggregate uplink transmission power and a power control priority, uplink power at which the UE accesses two systems.

In step 401, the UE obtains a parameter value of aggregate uplink transmission power.

The UE may obtain the parameter value of the aggregate uplink transmission power in the following three ways.

In a first way, the UE may configure aggregate maximum output power (Aggregate Max Output Power) based on uplink maximum output power for accessing each of the systems, as the parameter value of the aggregate uplink transmission power.

In the conventional standard, the uplink maximum output power for accessing each of the systems is specified, and the aggregate maximum output power may be configured to be not less than the maximum one of all of the uplink maximum output power and not greater than a sum of all of the uplink maximum output power. For example, if the uplink maximum output power of the UE for accessing RAT1 is 24dBm and the uplink maximum output power of the UE for accessing RAT2 is 23dBm, the aggregate maximum output power may be configured to be 30dBm. The aggregate maximum output power may be an aggregate maximum output power level and different levels are configured to correspond to different power value; for example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

In a second way, the UE receives aggregate maximum allowed transmission power (Aggregate Max Allowed UL TX Power) which is configured for the UE by the network equipment, as the parameter value of the aggregate uplink transmission power.

In the conventional condition, each of the access systems may configure maximum allowed uplink transmission power for the UE. According to the invention, the network equipment may configure the aggregate maximum allowed transmission power according to deployment of cells corresponding each RATs in the network. For example, in a case that the network includes a macro cell and micro cells, a sum of a maximum allowed uplink transmission power for the macro cell and a maximum allowed uplink transmission power for a micro cell may be configured as the aggregate maximum allowed transmission power.

Further, in a case that the network equipment also receives aggregate maximum output power configured by the UE, a smaller one of the aggregate maximum allowed transmission power configured described above and the aggregate maximum output power may be selected and taken as final aggregate maximum allowed transmission power. The network equipment sends the determined aggregate maximum allowed transmission power to the UE. Specifically, the UE may report a RF capability containing the aggregate maximum output power to the network equipment. In conjunction with the network architecture shown in Figure 1A, upon receipt of the RF capability, the RAT1 or RAT2 at the network side reports the RF capability to the network equipment where the MRPC is located, and the RF capability is stored by the network equipment.

The network equipment may send the aggregate maximum allowed uplink transmission power to the UE via the RAT1 or RAT2.

In a third way, the UE configures the aggregate maximum output power based on uplink maximum output power for accessing each of the systems, with the aggregate maximum output power being not less than a maximum one of all of the uplink maximum output power and not greater than a sum of all of the uplink maximum output power, and the UE also receives aggregate maximum allowed transmission power which is configured for the UE by the network equipment, then the UE selects a smaller one of the aggregate maximum output power and the aggregate maximum allowed transmission power and takes it as the parameter value of the aggregate uplink transmission power.

In the third way, the method for obtaining the aggregate maximum output power and the aggregate maximum allowed transmission power is the same as those described above in the first way and the second way, which is not repeated here. In the third way, after the UE obtains both the aggregate maximum output power and the aggregate maximum allowed transmission power, a smaller one of the aggregate maximum output power and the aggregate maximum allowed transmission power is selected and taken as the parameter value of the aggregate uplink transmission power.

In step 402, the UE obtains a power control priority which is configured for different systems by the network equipment or the UE.

The power control priority which is configured for different systems by the network equipment or the UE may be, for example, a system power control priority (for example, the priority of RAT1 is higher than that of RAT2); or may be a service power control priority (for example, the priority of voice service is higher than that of data service), that is, a system with a service of a higher priority may obtain power first; or may be a frequency point power control priority (for example, the priority of a frequency point f1 is higher than that of a frequency point f2), that is, a system with a frequency point of a higher priority may obtain power first.

In a case that the power control priority is configured by the network equipment, the network equipment may broadcast the above power control priority to the UE via a system message, or the network equipment may send the above power control priority to the UE via a specialized message. The above power control priority may be sent to the UE via RAT1 or RAT2.

In step 403, the UE detects a value of power at which the UE accesses each of the two systems.

At the beginning of accessing each system by the UE, the uplink transmission power of the UE to the system is increased gradually, and the UE has different uplink transmission power for accessing different systems. Therefore, the UE may detect at a preset time interval the uplink transmission power at which the UE accesses each of the systems, and a sum of values of power at which the UE currently accesses each of the systems may be obtained.

In step 404, when a sum of values of the power at which the UE accesses each of the systems is not less than the parameter value of the aggregate uplink transmission power, the UE increases the power of one of the two systems having a higher priority, and meanwhile stops increasing or reduces the power of one of the two systems having a lower priority.

After the UE obtains the sum of the values of the power at which the UE accesses each of the systems currently, it is determined whether the sum of the values of the power at which the UE accesses each of the systems currently is not less than the parameter value of the aggregate uplink transmission power; if it is, the UE needs to limit the uplink transmission power, and in this case, the UE may continue to increase the power of one of the two systems having a higher priority and meanwhile stop or reduce the power of one of the two systems having a lower priority; and if it is not, the UE does not need to limit the uplink transmission power, and in this case, the UE continues to control individually the uplink transmission power for each of the systems.

It should be noted that, in a case that the number of systems the UE accesses is more than two, it may be set in advance that in power limit, the UE continues to increase power for a preset number of systems having higher priorities and meanwhile stops or reduces power for other systems having lower priorities.

It can be seen from the above embodiment that, the UE obtains the power control priority and the parameter value of the aggregate uplink transmission power which is a control parameter of total transmission power for at least two systems, therefore, uplink power control performed by the UE based on the parameter value of the aggregate uplink transmission power and the power control priority may not only ensure transmission power of the UE to each of the systems, but also avoid excessive radiation of the UE and ensure QoS characteristics of service.

Referring to Figure 5 which is a fourth embodiment of a method for power control according to the invention, it is shown a process of performing a power control at a network equipment side.

In step 501, the network equipment obtains a parameter value of aggregate uplink transmission power, where the parameter value of the aggregate uplink transmission power is a power parameter value of UE in a case that the UE accesses at least two systems simultaneously.

The parameter value of the aggregate uplink transmission power obtained by the network equipment may be one of aggregate maximum allowed transmission power configured at the UE side and aggregate maximum output power configured at the network side, and there are the following three ways for obtaining the parameter value of the aggregate uplink transmission power:
the network equipment may configure for the UE aggregate maximum allowed transmission power as the parameter value of the aggregate uplink transmission power; or
the network equipment may receive aggregate maximum output power which is configured by the UE based on uplink maximum output power for accessing each of the systems, as the parameter value of the aggregate uplink transmission power, with the aggregate maximum output power being not less than a maximum value of the uplink maximum output power for all of the systems and not greater than a sum of the uplink maximum output power of all of the systems; the aggregate maximum output power may be an aggregate maximum output power level and different levels are configured to correspond to different power value; for example, a level A corresponds to aggregate maximum output power a1, and a level B corresponds to aggregate maximum output power b1, then the UE may directly report the aggregate maximum output power level corresponding to the aggregate maximum output power; for example, the UE may directly report A, and the network equipment side may learn that the corresponding aggregate maximum output power is a1; or
the network equipment may configure aggregate maximum allowed transmission power for the UE, and the network equipment receives aggregate maximum output power configured by the UE based on uplink maximum output power for accessing each of the systems, with the aggregate maximum output power being not less than a maximum value of the uplink maximum output power and not greater than a sum of the uplink maximum output power, and the network equipment selects a smaller one of the aggregate maximum allowed transmission power and the aggregate maximum output power and takes it as the parameter value of the aggregate uplink transmission power.

The parameter value of the aggregate uplink transmission power obtained by the network equipment may be an uplink transmission power margin, and there are the following three ways for obtaining the parameter value of the aggregate uplink transmission power:
the network equipment takes a first transmission power margin sent by the UE as the parameter value of the aggregate uplink transmission power, where the first transmission power margin is a difference between aggregate maximum output power configured by the UE and a sum of values of the power at which the UE accesses each of the systems, with the aggregate maximum output power being configured by the UE based on uplink maximum output power for accessing each of the systems and with the aggregate maximum output power being not less than a maximum value of the uplink maximum output power and not greater than a sum of the uplink maximum output power; or
the network equipment takes a second transmission power margin sent by the UE as the parameter value of the aggregate uplink transmission power, where the second transmission power margin is a difference between aggregate maximum allowed transmission power configured for the UE by the network equipment and a sum of values of the power at which the UE accesses each of the systems; or
the network equipment takes a third transmission power margin sent by the UE as the parameter value of the aggregate uplink transmission power, where the third transmission power margin is a difference between a smaller one selected from the aggregate maximum output power and the aggregate maximum allowed transmission power by the UE and a sum of values of the power at which the UE accesses each of the systems.

In step 502, the network equipment controls, based on the parameter value of the aggregate uplink transmission power, uplink power at which the UE accesses the at least two systems.

In a case that the parameter value of the aggregate uplink transmission power obtained by the network equipment is one of aggregate maximum allowed transmission power configured at the UE side and aggregate maximum output power configured at the network side, the network equipment receives the sum of values of the power at which the UE accesses each of the at least two systems sent by the UE, and stops increasing the power at which the UE accesses each of the systems when the sum of the values of the power is not less than the parameter value of the aggregate uplink transmission power.

Further, in a case that the network equipment obtains a power control priority which is configured for different systems by the network equipment or the UE, the network equipment controls the power at which the UE accesses the at least two systems based on the parameter value of the aggregate uplink transmission power and the power control priority. Specifically, the network equipment receives the sum of values of the power at which the UE accesses each of the at least two systems sent by the UE, and when the sum of the values of the power is not less than the parameter value of the aggregate uplink transmission power, the network equipment increases, in an order of the power control priority from high to low, the power at which the UE accesses a preset number of systems having higher priorities, and meanwhile stops increasing or reduces the power at which the UE accesses other systems rather than the systems having the higher priorities.

In a case that the parameter value of the aggregate uplink transmission power obtained by the network equipment is an uplink transmission power margin, the network equipment stops increasing the power at which the UE accesses each of the systems when the transmission power margin is not greater than zero.

Further, in a case that the network equipment obtains a power control priority which is configured for different systems by the network equipment or the UE, the network equipment controls, based on the transmission power margin and the power control priority, the power at which the UE accesses the at least two systems. Specifically, when the transmission power margin is not greater than zero, the network equipment increases, in an order of the power control priority from high to low, the power at which the UE accesses a preset number of systems having higher priorities, and meanwhile stops increasing or reduces the power at which the UE accesses other systems rather than the systems having higher priorities.

It can be seen from the above embodiment that, the network equipment obtains the parameter value of the aggregate uplink transmission power which is a control parameter of total transmission power for the at least two systems, therefore, uplink power control performed by the network equipment based on the parameter value of the aggregate uplink transmission power may not only ensure transmission power of the UE to each of the systems, but also avoid excessive radiation of the UE and ensure QoS characteristics of service.

A process of the power control performed at the network equipment side according to the invention is described in detail below in conjunction with the schematic diagram of the network architecture shown in Figure 1A in which the UE accesses two systems.

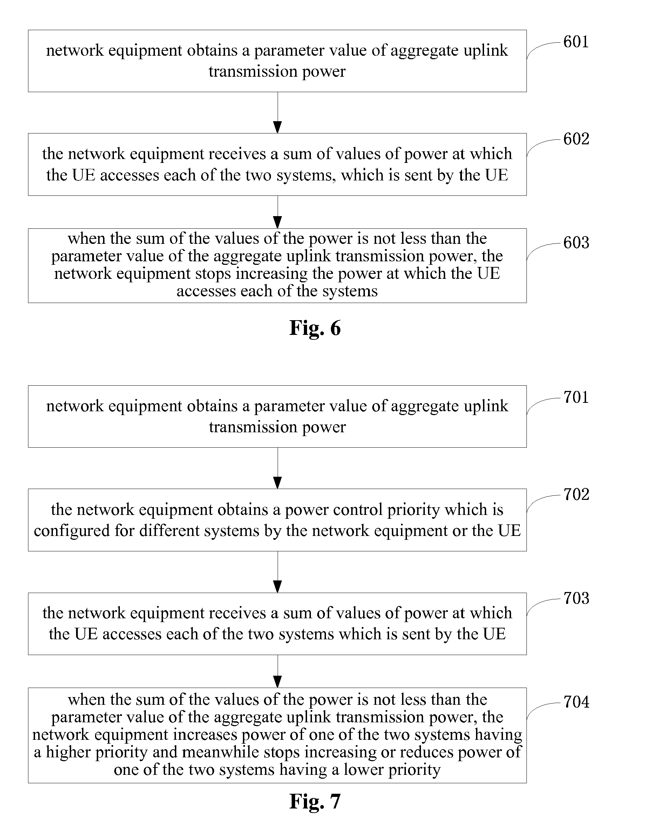

Referring to Figure 6 which is a flowchart of a fifth embodiment of a method for power control according to the invention, it is shown a process in which the UE controls, based on a parameter value of aggregate uplink transmission power, uplink power at which the UE accesses the two systems.

In step 601, the network equipment obtains a parameter value of aggregate uplink transmission power.

The network equipment may obtain the parameter value of the aggregate uplink transmission power in any one of the following three ways.

In a first way, the network equipment may configure for the UE aggregate maximum allowed transmission power (Aggregate Max Allowed UL TX Power) as the parameter value of the aggregate uplink transmission power.

In the conventional condition, each of the access systems may configure maximum allowed uplink transmission power for the UE. According to the invention, the network equipment may configure the aggregate maximum allowed transmission power according to deployment of cells corresponding each RATs in the network. For example, in a case that the network includes a macro cell and a micro cell, a sum of maximum allowed uplink transmission power for the macro cell and maximum allowed uplink transmission power for the micro cell may be configured as the aggregate maximum allowed transmission power.

Further, in a case that the network equipment also receives aggregate maximum output power configured by the UE, a smaller one of the aggregate maximum allowed transmission power configured described above and the aggregate maximum output power may be selected and taken as final aggregate maximum allowed transmission power. The network equipment sends the determined aggregate maximum allowed transmission power to the UE. Specifically, the UE may report a RF capability containing the aggregate maximum output power to the network equipment. In conjunction with the network architecture shown in Figure 1A, upon receipt of the RF capability, the RAT1 or RAT2 at the network side reports the RF capability to the network equipment where the MRPC is located, and the RF capability is stored by the network equipment.

In a second way, the network equipment may receive aggregate maximum output power (Aggregate Max Output Power) which is configured by the UE based on uplink maximum output power for accessing each of the systems, and take the aggregate maximum output power as the parameter value of the aggregate uplink transmission power.

In the conventional standard, the uplink maximum output power for accessing each of the systems is specified, and the aggregate maximum output power may be configured to be not less than the maximum one of all of the uplink maximum output power and not greater than a sum of all of the uplink maximum output power. For example, if the uplink maximum output power of the UE for accessing RAT1 is 24dBm and the uplink maximum output power of the UE for accessing RAT2 is 23dBm, the aggregate maximum output power may be configured to be 30dBm. The aggregate maximum output power may be an aggregate maximum output power level and different levels are configured to correspond to different power value; for example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

The UE may send the aggregate maximum output power to the network equipment via RAT1 or RAT2.

In a third way, the network equipment may configure aggregate maximum allowed transmission power for the UE and the network equipment receives aggregate maximum output power which is configured by the UE based on uplink maximum output power for accessing each of the systems, and then the network equipment selects a smaller one of the aggregate maximum allowed transmission power and the aggregate maximum output power and takes it as the parameter value of the aggregate uplink transmission power.

In the third way, the method for obtaining the aggregate maximum output power and the aggregate maximum allowed transmission power is the same as those described above in the first way and the second way, which is not repeated here. In the third way, after the network equipment obtains both the aggregate maximum output power and the aggregate maximum allowed transmission power, a smaller one of the aggregate maximum output power and the aggregate maximum allowed transmission power is selected and taken as the parameter value of the aggregate uplink transmission power.

In step 602, the network equipment receives a sum of values of the power at which the UE accesses each of the two systems, which is sent by the UE.

At the beginning of accessing each system by the UE, the uplink transmission power of the UE to the system is increased gradually, and the UE has different uplink transmission power for accessing different systems. Therefore, the UE may detect at a preset time interval the uplink transmission power at which the UE accesses each of the systems, and a sum of values of power at which the UE currently accesses each of the systems may be obtained. The UE may send the obtained sum of values of the power at which the UE currently accesses each of the systems to the network equipment via RAT1 or RAT2.

In step 603, when the sum of the values of the power at which the UE accesses each of the systems is not less than the parameter value of aggregate uplink transmission power, the network equipment stops increasing the power at which the UE currently accesses each of the systems.

After the network equipment obtains the sum of the values of the power at which the UE currently accesses each of the systems, it is determined whether the sum of the values of the power is not less than the parameter value of the aggregate uplink transmission power; if it is, the UE needs to limit the uplink transmission power, and in this case, the network equipment stops increasing the power at which the UE accesses each of the systems; and if it is not, the UE does not need to limit the uplink transmission power, and in this case, the network equipment continues to increase the uplink transmission power at which the UE accesses each of the systems.

It can be seen from the above embodiment that, the network equipment obtains the parameter value of the aggregate uplink transmission power which is a control parameter of total transmission power for the at least two systems, therefore, uplink power control performed by the network equipment based on the parameter value of the aggregate uplink transmission power may not only ensure transmission power of the UE to each of the systems, but also avoid excessive radiation of the UE and ensure QoS characteristics of service.

Referring to Figure 7 which is a flowchart of a sixth embodiment of a method for power control according to the invention, it is shown a process in which the network equipment controls, based on a parameter value of aggregate uplink transmission power and a power control priority, uplink power at which the UE accesses two systems.

In step 701, the network equipment obtains a parameter value of aggregate uplink transmission power.

The network equipment may obtain the parameter value of the aggregate uplink transmission power in any one of the following three ways.

In a first way, the network equipment may configure for the UE aggregate maximum allowed transmission power (Aggregate Max Allowed UL TX Power) as the parameter value of the aggregate uplink transmission power.

In the conventional condition, each of the access systems may configure maximum allowed uplink transmission power for the UE. According to the invention, the network equipment may configure the aggregate maximum allowed transmission power according to deployment of cells corresponding each RATs in the network. For example, in a case that the network includes a macro cell and a micro cell, a sum of maximum allowed uplink transmission power for the macro cell and maximum allowed uplink transmission power for the micro cell may be configured as the aggregate maximum allowed transmission power.

Further, in a case that the network equipment also receives aggregate maximum output power configured by the UE, a smaller one of the aggregate maximum allowed transmission power configured as above and the aggregate maximum output power may be selected and taken as final aggregate maximum allowed transmission power. The network equipment sends the determined aggregate maximum allowed transmission power to the UE. Specifically, the UE may report a RF capability containing the aggregate maximum output power to the network equipment. In conjunction with the network architecture shown in Figure 1A, upon receipt of the RF capability, the RAT1 or RAT2 at the network side reports the RF capability to the network equipment where the MRPC is located, and the RF capability is stored by the network equipment.

In a second way, the network equipment may receive aggregate maximum output power (Aggregate Max Output Power) which is configured by the UE based on uplink maximum output power for accessing each of the systems, and take the aggregate maximum output power as the parameter value of the aggregate uplink transmission power.

In the conventional standard, the uplink maximum output power for accessing each of the systems is specified, and the aggregate maximum output power may be configured to be not less than the maximum one of all of the uplink maximum output power and not greater than a sum of all of the uplink maximum output power. For example, if the uplink maximum output power of the UE for accessing RAT1 is 24dBm and the uplink maximum output power of the UE for accessing RAT2 is 23dBm, the aggregate maximum output power may be configured to be 30dBm. The aggregate maximum output power may be an aggregate maximum output power level and different levels are configured to correspond to different power value; for example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

The UE may send the aggregate maximum output power to the network equipment via RAT1 or RAT2.

In a third way, the network equipment may configure aggregate maximum allowed transmission power for the UE and the network equipment receives aggregate maximum output power which is configured by the UE based on uplink maximum output power for accessing each of the systems, and then the network equipment selects a smaller one of the aggregate maximum allowed transmission power and the aggregate maximum output power and takes it as the parameter value of the aggregate uplink transmission power.

In the third way, the method for obtaining the aggregate maximum output power and the aggregate maximum allowed transmission power is the same as those described above in the first way and the second way, which is not repeated here. In the third way, after the network equipment obtains both the aggregate maximum output power and the aggregate maximum allowed transmission power, a smaller one of the aggregate maximum output power and the aggregate maximum allowed transmission power is selected and taken as the parameter value of the aggregate uplink transmission power.

In step 702, the network equipment obtains a power control priority which is configured for different systems by the network equipment or the UE.

The power control priority which is configured for different systems by the network equipment or the UE may be, for example, a system power control priority (for example, the priority of RAT1 is higher than that of RAT2); or may be a service power control priority (for example, the priority of voice service is higher than that of data service), that is, a system with a service of a higher priority may obtain power first; or may be a frequency point power control priority (for example, the priority of a frequency point f1 is higher than that of a frequency point f2), that is, a system with a frequency point of a higher priority may obtain power first.

In step 703, the network equipment receives a sum of values of the power at which the UE accesses each of the two systems, which is sent by the UE.

At the beginning of accessing each system by the UE, the uplink transmission power of the UE to the system is increased gradually, and the UE has different uplink transmission power for accessing different systems. Therefore, the UE may detect at a preset time interval the uplink transmission power at which the UE accesses each of the systems, and a sum of values of the power at which the UE accesses each of the systems currently may be obtained. The UE may send the obtained sum of values of the power at which the UE accesses each of the systems currently to the network equipment via RAT1 or RAT2.

In step 704, when the sum of the values of the power at which the UE accesses each of the systems is not less than the parameter value of the aggregate uplink transmission power, the network equipment increases power for one of the two systems having a higher priority, and meanwhile stops increasing or reduces power for one of the two systems having a lower priority.

After the network equipment obtains the sum of the values of the power at which the UE accesses each of the systems currently, it is determined whether the sum of the values of the power at which the UE accesses each of the systems currently is not less than the parameter value of the aggregate uplink transmission power; if it is, the UE needs to limit the uplink transmission power, and in this case, the network equipment may continue to increase power for one of the two systems having a higher priority, and meanwhile stop or reduce power for one of the two systems having a lower priority; and if it is not, the UE does not need to limit the uplink transmission power, and in this case, the network equipment continues to increase the uplink transmission power at which the UE accesses each of the systems.

It should be noted that, in a case that the number of systems the UE accesses is more than two, it may be set in advance that in power limit, the network equipment continues to increase power for a preset number of systems having higher priorities and meanwhile stops or reduces power for other systems having lower priorities.

It can be seen from the above embodiment that, the network equipment obtains the power control priority and the parameter value of the aggregate uplink transmission power which is a control parameter of total transmission power for the at least two systems, therefore, uplink power control performed by the network equipment based on the parameter value of the aggregate uplink transmission power and the power control priority may not only ensure transmission power of the UE to each of the systems, but also avoid excessive radiation of the UE and ensure QoS characteristics of service.

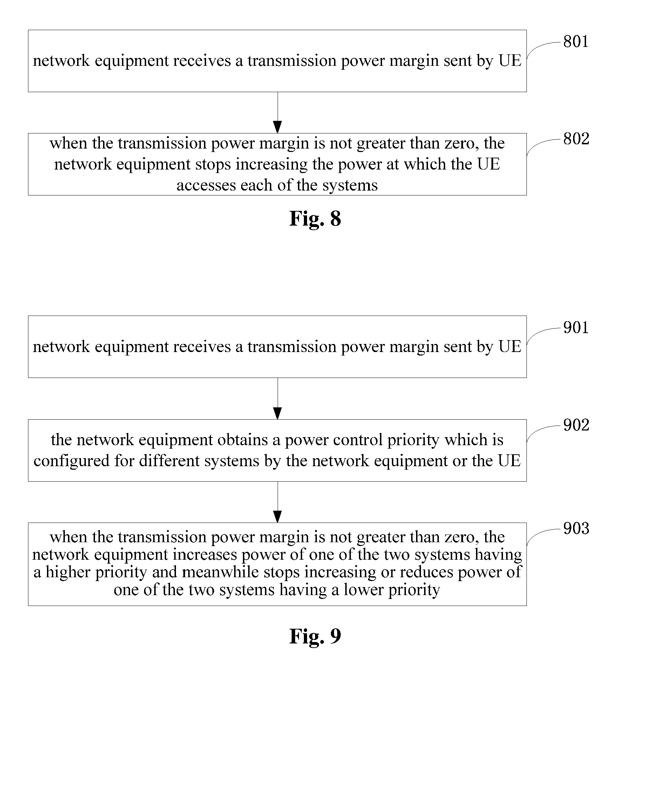

Referring to Figure 8 which is a flowchart of a seventh embodiment of a method for power control according to the invention, it is shown another process in which the network equipment controls, based on a parameter value of aggregate uplink transmission power, uplink power at which the UE accesses two systems.

In step 801, the network equipment receives a transmission power margin sent by the UE.

The network equipment may receive a transmission power margin sent by the UE in any one of the following three ways.

### A first way

The UE obtains a difference between aggregate maximum output power (Aggregate Max Output Power) configured based on uplink maximum output power for accessing each of the systems and a sum of values of power at which the UE accesses each of the systems, with the aggregate maximum output power being not less than a maximum value of the uplink maximum output power and not greater than a sum of the uplink maximum output power. The UE takes the obtained difference as the transmission power margin and sends it to the network equipment. The UE may send the transmission power margin to the network equipment via RAT1 or RAT2. The aggregate maximum output power may be an aggregate maximum output power level and different levels are configured to correspond to different power value. For example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

### A second way

The network equipment configures aggregate maximum allowed transmission power (Aggregate Max Allowed UL TX Power) for the UE and sends the aggregate maximum allowed transmission power to the UE. The UE obtains a difference between the aggregate maximum allowed transmission power and a sum of values of power at which the UE accesses each of the systems. The UE takes the obtained difference as the transmission power margin and sends it to the network equipment. The UE may send the transmission power margin to the network equipment via RAT1 or RAT2.

### A third way

The UE configures aggregate maximum output power (Aggregate Max Output Power) based on uplink maximum output power for accessing each of the systems, and the network equipment configures aggregate maximum allowed transmission power (Aggregate Max Allowed UL TX Power) for the UE and sends the aggregate maximum allowed transmission power to the UE. The UE selects a smaller one of the aggregate maximum output power and the aggregate maximum allowed transmission power, and the UE obtains a difference between the smaller one and the sum of values of power at which the UE accesses each of the systems. The UE takes the obtained difference as the transmission power margin and sends it to the network equipment. The UE may send the transmission power margin to the network equipment via RAT1 or RAT2.

In step 802, if the transmission power margin is not greater than zero, the network equipment stops increasing the power at which the UE accesses each of the systems.

After the network equipment obtains the transmission power margin sent by the UE, the network equipment may determine whether the transmission power margin is not greater than zero; if the transmission power margin is not greater than zero, the UE needs to limit the uplink transmission power, and in this case, the network equipment stops increasing the power at which the UE accesses each of the systems; and if the transmission power margin is greater than zero, the UE does not need to limit the uplink transmission power, and in this case, the network equipment continues to increase the uplink transmission power at which the UE accesses each of the systems.

It can be seen from the above embodiment that, the network equipment obtains the parameter value of the aggregate uplink transmission power and takes it as the transmission power margin, which is a control parameter of total transmission power for the at least two systems, therefore, uplink power control performed by the network equipment based on the transmission power margin may not only ensure transmission power of the UE to each of the systems, but also avoid excessive radiation of the UE and ensure QoS characteristics of service.

Referring to Figure 9 which is a flowchart of an eighth embodiment of a method for power control according to the invention, it is shown another process in which the network equipment controls, based on a parameter value of aggregate uplink transmission power and a power control priority, uplink power at which the UE accesses two systems.

In step 901, the network equipment receives a transmission power margin sent by the UE.

The network equipment may receive a transmission power margin sent by the UE in any one of the following three ways.

### A first way

The UE obtains a difference between aggregate maximum output power (Aggregate Max Output Power) configured based on uplink maximum output power for accessing each of the systems and a sum of values of power at which the UE accesses each of the systems, with the aggregate maximum output power being not less than a maximum value of the uplink maximum output power and not greater than a sum of the uplink maximum output power. The UE takes the obtained difference as the transmission power margin and sends it to the network equipment. The UE may send the transmission power margin to the network equipment via RAT1 or RAT2. The aggregate maximum output power may be an aggregate maximum output power level and different levels are configured to correspond to different power value. For example, a level A corresponds to aggregate maximum output power a1, and a level B corresponds to aggregate maximum output power b1. The UE may directly report the aggregate maximum output power level corresponding to the aggregate maximum output power; for example, the UE may directly report A, and the network equipment side may learn that the corresponding aggregate maximum output power is a1.

### A second way

The network equipment configures aggregate maximum allowed transmission power (Aggregate Max Allowed UL TX Power) for the UE and sends the aggregate maximum allowed transmission power to the UE. The UE obtains a difference between the aggregate maximum allowed transmission power and a sum of values of power at which the UE accesses each of the systems. The UE takes the obtained difference as the transmission power margin and sends it to the network equipment. The UE may send the transmission power margin to the network equipment via RAT1 or RAT2.

### A third way

The UE configures aggregate maximum output power (Aggregate Max Output Power) based on uplink maximum output power for accessing each of the systems, and the network equipment configures aggregate maximum allowed transmission power (Aggregate Max Allowed UL TX Power) for the UE and sends the aggregate maximum allowed transmission power to the UE. The UE selects a smaller one of the aggregate maximum output power and the aggregate maximum allowed transmission power, and the UE obtains a difference between the smaller one and the sum of values of power at which the UE accesses each of the systems. The UE takes the obtained difference as the transmission power margin and sends it to the network equipment. The UE may send the transmission power margin to the network equipment via RAT1 or RAT2.

In step 902, the network equipment obtains a power control priority which is configured for different systems by the network equipment or the UE.

The power control priority which is configured for different systems by the network equipment or the UE may be, for example, a system power control priority (for example, the priority of RAT1 is higher than that of RAT2); or may be a service power control priority (for example, the priority of voice service is higher than that of data service), that is, a system with a service of a higher priority may obtain power first; or may be a frequency point power control priority (for example, the priority of a frequency point f1 is higher than that of a frequency point f2), that is, a system with a frequency point of a higher priority may obtain power first.

In step 903, if the transmission power margin is not greater than zero, the network equipment increases the power for one of the two systems having a higher priority, and meanwhile stops increasing or reduces the power for one of the two systems having a lower priority.

After the network equipment obtains the transmission power margin, the network equipment may determine whether the transmission power margin is not greater than zero; if the transmission power margin is not greater than zero, the UE needs to limit the uplink transmission power, and in this case, the network equipment may continue to increase the power for one of the two systems having a higher priority, and meanwhile stop or reduce the power for one of the two systems having a lower priority; and if the transmission power margin is greater than zero, the UE does not need to limit the uplink transmission power, and in this case, the network equipment continues to increase the uplink transmission power at which the UE accesses each of the systems.

It should be noted that, in a case that the number of systems the UE accesses is more than two, it may be set in advance that in power limit, the network equipment continues to increase power for a preset number of systems having higher priorities and meanwhile stops or reduces power for other systems having lower priorities.

It can be seen from the above embodiment that, the network equipment obtains the power control priority and the parameter value of the aggregate uplink transmission power as the transmission power margin which is a control parameter of total transmission power for the at least two systems, therefore, uplink power control performed by the network equipment based on the transmission power margin and the power control priority may not only ensure transmission power of the UE to each of the systems, but also avoid excessive radiation of the UE and ensure QoS characteristics of service.

Corresponding to the embodiments of the method for power control according to the invention, embodiments of UE for power control and network equipment for power control are provided according to the invention.

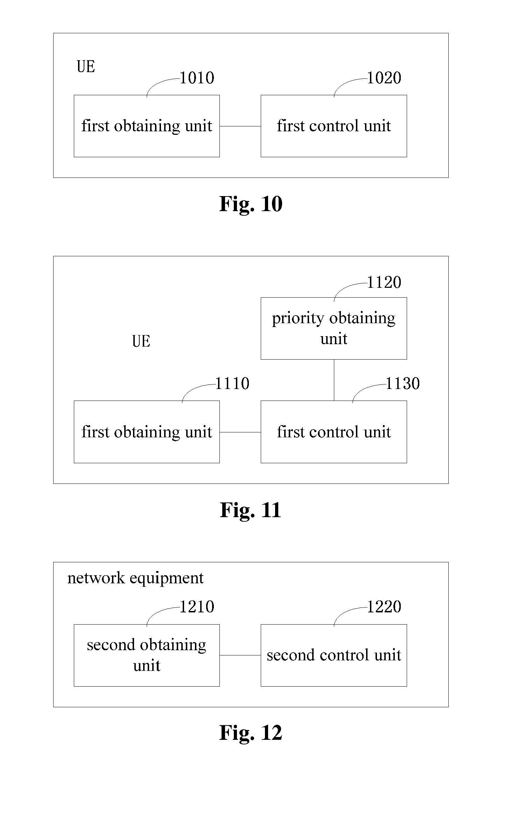

Reference is made to Figure 10 which is a block diagram of a first embodiment of UE according to the invention.

The UE includes a first obtaining unit 1010 and a first control unit 1020.

The first obtaining unit 1010 is configured to obtain a parameter value of aggregate uplink transmission power, where the parameter value of the aggregate uplink transmission power is a power parameter value of the UE in a case that the UE accesses at least two systems simultaneously.

The first control unit 1020 is configured to control, based on the parameter value of the aggregate uplink transmission power, power at which the UE accesses the at least two systems.

The first obtaining unit 1010 may include sub-units as follows (not shown in Figure 10):
a first parameter obtaining sub-unit, configured to obtain at least one of following parameters: aggregate maximum output power which is configured by the UE based on uplink maximum output power for accessing each of the systems, as a first parameter, where the aggregate maximum output power is not less than a maximum value of the uplink maximum output power and not greater than a sum of the uplink maximum output power; and aggregate maximum allowed transmission power which is configured for the UE by the network equipment as a second parameter; and
a first parameter value determination sub-unit, configured to determine the first parameter as the parameter value of the aggregate uplink transmission power in a case that only the first parameter is obtained by the first parameter obtaining sub-unit; or determine the second parameter as the parameter value of the aggregate uplink transmission power in a case that only the second parameter is obtained by the first parameter obtaining sub-unit; or select a smaller one of the first parameter and the second parameter and take it as the parameter value of the aggregate uplink transmission power in a case that both the first parameter and the second parameter are obtained by the first parameter obtaining sub-unit.

The first control unit 1020 may include sub-units as follows (not shown in Figure 10):
a first power value detection sub-unit, configured to detect a value of the power at which the UE accesses each of the at least two systems; and
a first power control sub-unit, configured to stop increasing the power at which the UE accesses each of the systems when a sum of the values of the power at which the UE accesses each of the systems is not less than the parameter value of the aggregate uplink transmission power.

Reference is made to Figure 11 which is a block diagram of a second embodiment of UE according to the invention.

The UE includes a first obtaining unit 1110, a priority obtaining unit 1120 and a first control unit 1130.

The first obtaining unit 1110 is configured to obtain a parameter value of aggregate uplink transmission power, where the parameter value of the aggregate uplink transmission power is a power parameter value of the UE in a case that the UE accesses at least two systems simultaneously.

The priority obtaining unit 1120 is configured to obtain a power control priority which is configured for different systems by network equipment or the UE.

The first control unit 1130 is configured to control, based on the parameter value of the aggregate uplink transmission power and the power control priority, power at which the UE accesses the at least two systems.

The first obtaining unit 1110 may include sub-units as follows (not shown in Figure 11):
a first parameter obtaining sub-unit, configured to obtain at least one of following parameters: aggregate maximum output power which is configured by the UE based on uplink maximum output power for accessing each of the systems as a first parameter, where the aggregate maximum output power is not less than a maximum value of the uplink maximum output power and not greater than a sum of the uplink maximum output power; and aggregate maximum allowed transmission power which is configured for the UE by the network equipment as a second parameter; and
a first parameter value determination sub-unit, configured to determine the first parameter as the parameter value of the aggregate uplink transmission power in a case that only the first parameter is obtained by the first parameter obtaining sub-unit; or determine the second parameter as the parameter value of the aggregate uplink transmission power in a case that only the second parameter is obtained by the first parameter obtaining sub-unit; or select a smaller one of the first parameter and the second parameter and take it as the parameter value of the aggregate uplink transmission power in a case that both the first parameter and the second parameter are obtained by the first parameter obtaining sub-unit.

The first control unit 1130 may include sub-units as follows (not shown in Figure 11):
a second power value detection sub-unit, configured to detect a value of the power at which the UE accesses each of the at least two systems; and
a second power control sub-unit, configured to increase, in an order of the power control priority from high to low, the power at which the UE accesses a preset number of systems having higher priorities and meanwhile stop increasing or reducing the power at which the UE accesses other systems rather than the systems having the higher priorities, when a sum of the values of the power at which the UE accesses each of the systems is not less than the parameter value of the aggregate uplink transmission power.

Reference is made to Figure 12 which is a block diagram of a first embodiment of network equipment according to the invention.

The network equipment includes a second obtaining unit 1210 and a second control unit 1220.

The second obtaining unit 1210 is configured to obtain a parameter value of aggregate uplink transmission power, where the parameter value of the aggregate uplink transmission power is a power parameter value of UE in a case that the UE accesses at least two systems simultaneously.

The second control unit 1220 is configured to control, based on the parameter value of the aggregate uplink transmission power, power at which the UE accesses the at least two systems.

The second obtaining unit 1210 may include sub-units as follows (not shown in Figure 12): a second parameter obtaining sub-unit, configured to obtain at least one of following parameters: aggregate maximum allowed transmission power which is configured for the UE by the network equipment as a third parameter; and aggregate maximum output power which is configured by the UE based on uplink maximum output power for accessing each of the systems as a fourth parameter, where the aggregate maximum output power is not less than a maximum value of the uplink maximum output power and not greater than a sum of the uplink maximum output power; and a second parameter value determination sub-unit, configured to determine the third parameter as the parameter value of the aggregate uplink transmission power in a case that only the third parameter is obtained by the second parameter obtaining sub-unit; or determine the fourth parameter as the parameter value of the aggregate uplink transmission power in a case that only the fourth parameter is obtained by the second parameter obtaining sub-unit; or select a smaller one of the third parameter and the fourth parameter and take it as the parameter value of the aggregate uplink transmission power in a case that both the third parameter and the fourth parameter are obtained by the second parameter obtaining sub-unit. The second control unit 1220 may include sub-units as follows (not shown in Figure 12): a first power value sum reception sub-unit, configured to receive a sum of values of the power at which the UE accesses each of the at least two systems, which is sent by the UE; and a third power control sub-unit, configured to stop increasing the power at which the UE accesses each of the systems when the sum of the values of the power at which the UE accesses each of the at least two systems is not less than the parameter value of the aggregate uplink transmission power.

The second obtaining unit 1210 may also include sub-units as follows (not shown in Figure 12): a transmission power margin obtaining sub-unit, configured to obtain any one of following transmission power margins: a first transmission power margin which is sent by the UE and taken as the parameter value of the aggregate uplink transmission power, where the first transmission power margin is a difference between aggregate maximum output power configured by the UE and a sum of values of the power at which the UE accesses each of the systems, with the aggregate maximum output power being configured by the UE based on uplink maximum output power for accessing each of the systems and with the aggregate maximum output power being not less than a maximum value of the uplink maximum output power and not greater than a sum of the uplink maximum output power; a second transmission power margin which is sent by the UE and taken as the parameter value of the aggregate uplink transmission power, where the second transmission power margin is a difference between aggregate maximum allowed transmission power configured for the UE by the network equipment and the sum of values of the power at which the UE accesses each of the systems; and a third transmission power margin which is sent by the UE and taken as the parameter value of the aggregate uplink transmission power, where the third transmission power margin is a difference between a smaller one selected from the aggregate maximum output power and the aggregate maximum allowed transmission power by the UE and the sum of values of the power at which the UE accesses each of the systems. The second control unit 1220 may include sub-units as follows (not shown in Figure 12): a fifth power control sub-unit, configured to stop increasing the power at which the UE accesses each of the systems when the transmission power margin is not greater than zero.

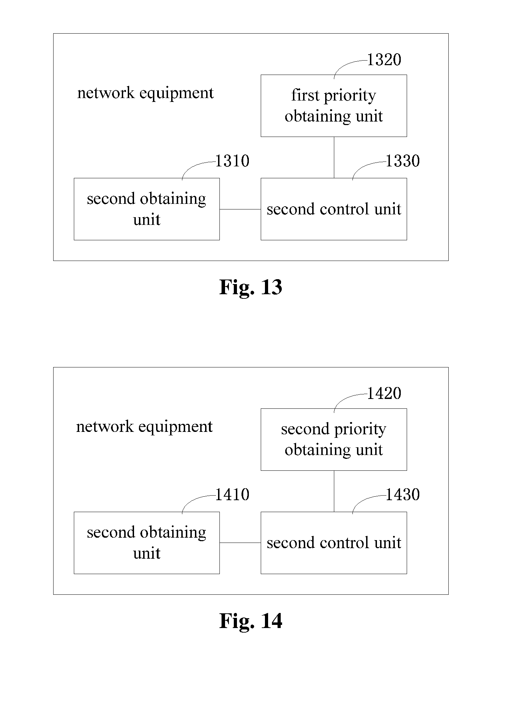

Reference is made to Figure 13 which is a block diagram of a second embodiment of network equipment according to the invention.

The network equipment includes a second obtaining unit 1310, a first priority obtaining unit 1320 and a second control unit 1330.

The second obtaining unit 1310 is configured to obtain a parameter value of aggregate uplink transmission power, where the parameter value of the aggregate uplink transmission power is a power parameter value of UE in a case that the UE accesses at least two systems simultaneously.

The first priority obtaining unit 1320 is configured to obtain a power control priority which is configured for different systems by the network equipment or the UE.

The second control unit 1330 is configured to control, based on the parameter value of aggregate uplink transmission power and the power control priority, power at which the UE accesses the at least two systems.

The second obtaining unit 1310 may include sub-units as follows (not shown in Figure 13): a second parameter obtaining sub-unit, configured to obtain at least one of following parameters: aggregate maximum allowed transmission power which is configured for the UE by the network equipment as a third parameter; and aggregate maximum output power which is configured by the UE based on uplink maximum output power for accessing each of the systems as a fourth parameter, where the aggregate maximum output power is not less than a maximum value of the uplink maximum output power and not greater than a sum of the uplink maximum output power; and a second parameter value determination sub-unit, configured to determine the third parameter as the parameter value of the aggregate uplink transmission power in a case that only the third parameter is obtained by the second parameter obtaining sub-unit; or determine the fourth parameter as the parameter value of the aggregate uplink transmission power in a case that only the fourth parameter is obtained by the second parameter obtaining sub-unit; or select a smaller one of the third parameter and the fourth parameter and take it as the parameter value of the aggregate uplink transmission power in a case that both the third parameter and the fourth parameter are obtained by the second parameter obtaining sub-unit. The second control unit 1330 may include sub-units as follows (not shown in Figure 13): a second power value sum reception sub-unit, configured to receive a sum of values of the power at which the UE accesses each of the at least two systems, which is sent by the UE; and a fourth power control sub-unit, configured to increase, in an order of the power control priority from high to low, the power at which the UE accesses a preset number of systems having higher priorities and meanwhile stop increasing or reduce the power at which the UE accesses other systems rather than the systems having the higher priorities, when the sum of the values of the power at which the UE accesses each of the at least two systems is not less than the parameter value of the aggregate uplink transmission power.

Reference is made to Figure 14 which is a block diagram of a third embodiment of network equipment according to the invention.

The network equipment includes a second obtaining unit 1410, a second priority obtaining unit 1420 and a second control unit 1430.

The second obtaining unit 1410 is configured to obtain a transmission power margin as a parameter value of aggregate uplink transmission power, where the parameter value of the aggregate uplink transmission power is a power parameter value of UE in a case that the UE accesses at least two systems simultaneously.

The second priority obtaining unit 1420 is configured to obtain a power control priority which is configured for different systems by the network equipment or the UE.

The second control unit 1430 is configured to control, based on the transmission power margin and the power control priority, power at which the UE accesses the at least two systems.

The second obtaining unit 1410 may include sub-units as follows (not shown in Figure 14): a transmission power margin obtaining sub-unit, configured to obtain any one of following transmission power margins: a first transmission power margin which is sent by the UE and taken as the parameter value of the aggregate uplink transmission power, where the first transmission power margin is a difference between aggregate maximum output power configured by the UE and a sum of values of the power at which the UE accesses each of the systems, with the aggregate maximum output power being configured by the UE based on uplink maximum output power for accessing each of the systems and with the aggregate maximum output power being not less than a maximum value of the uplink maximum output power and not greater than a sum of the uplink maximum output power; a second transmission power margin which is sent by the UE and taken as the parameter value of the aggregate uplink transmission power, where the second transmission power margin is a difference between aggregate maximum allowed transmission power configured for the UE by the network equipment and the sum of values of the power at which the UE accesses each of the systems; and a third transmission power margin which is sent by the UE and taken as the parameter value of the aggregate uplink transmission power, where the third transmission power margin is a difference between a smaller one selected from the aggregate maximum output power and the aggregate maximum allowed transmission power by the UE and the sum of values of the power at which the UE accesses each of the systems. The second control unit 1430 may include sub-units as follows (not shown in Figure 14): a sixth power control sub-unit, configured to increase, in an order of the power control priority from high to low, the power at which the UE accesses a preset number of systems having higher priorities and meanwhile stop increasing or reduce the power at which the UE accesses other systems rather than the systems having the higher priorities, when the transmission power margin is not greater than zero.

It can be seen from the above embodiments that, the power at which the UE accesses the at least two systems is controlled, and the power at which the UE accesses the at least two systems is controlled based on a parameter value of aggregate uplink transmission power after obtaining the parameter value of the aggregate uplink transmission power, whether at the UE side or at the network equipment side. According to embodiments of the invention, the parameter value of the aggregate uplink transmission power is obtained, with the parameter value of the aggregate uplink transmission power being a control parameter of total transmission power for the at least two systems, therefore, uplink power control based on the parameter value of the aggregate uplink transmission power may not only ensure transmission power of UE to each of the systems, but also avoid excessive radiation of UE and ensure QoS characteristics of service.

It can be understood clearly by those skilled in the art that techniques according to the embodiments of the invention may be implemented by means of software and necessary general hardware platform. Based on this understanding, the essential part or the part which contributes to the conventional condition, of the technical solutions according to the embodiments of the invention may be embodied in a form of a software product. The computer software product may be stored in a storage medium, such as ROM/RAM, a magnetic disk or an optical disk, and include several instructions to make computer equipment (which may be a personal computer, a server or network equipment) execute the method described according to the embodiments of the invention or some parts of the embodiments.

In the present specification, the embodiments are described in progression, reference can be made to these similar parts among the embodiments, and each embodiment mainly focuses on the difference between itself and other embodiments. In particular, the system embodiments are described simply since they are similar to the method embodiments, and relevant portions of the system embodiments can refer to related description of the method embodiments.

The above embodiments of the invention do not limit the scope of the invention. Any modification, equivalent replacement, improvement and the like, which are made within the spirit and the principle of the invention, should be contained in the scope of the invention.

## Claims

1. A method for power control, comprising:
obtaining, by an user equipment UE, a parameter value of aggregate uplink transmission power, wherein the parameter value of the aggregate uplink transmission power is a power parameter value of the UE in a case that the UE accesses at least two systems simultaneously; and
controlling, based on the parameter value of the aggregate uplink transmission power, power at which the UE accesses the at least two systems.

2. The method according to claim 1, wherein obtaining, by a user equipment UE, a parameter value of aggregate uplink transmission power comprises:
obtaining, by the UE, at least one of following parameters:
aggregate maximum output power which is configured by the UE based on uplink maximum output power for accessing each of the systems as a first parameter, wherein the aggregate maximum output power is not less than a maximum value of the uplink maximum output power and is not greater than a sum of the uplink maximum output power; and
aggregate maximum allowed transmission power which is configured for the UE by network equipment as a second parameter; and
determining the first parameter as the parameter value of the aggregate uplink transmission power in a case that only the first parameter is obtained; or determining the second parameter as the parameter value of the aggregate uplink transmission power in a case that only the second parameter is obtained; or selecting a smaller one of the first parameter and the second parameter and taking it as the parameter value of the aggregate uplink transmission power in a case that both the first parameter and the second parameter are obtained.

3. The method according to claim 1 or 2, wherein controlling, based on the parameter value of the aggregate uplink transmission power, power at which the UE accesses the at least two systems comprises:
detecting a value of the power at which the UE accesses each of the at least two systems; and
stopping increasing the power at which the UE accesses each of the systems when a sum of the values of the power at which the UE accesses each of the systems is not less the parameter value of the aggregate uplink transmission power.

4. The method according to claim 1 or 2, further comprising:
obtaining, by the UE, a power control priority which is configured for different systems by network equipment or the UE,
wherein controlling, based on the parameter value of the aggregate uplink transmission power, power at which the UE accesses the at least two systems comprises:
controlling, based on the parameter value of the aggregate uplink transmission power and the power control priority, the power at which the UE accesses the at least two systems.

5. The method according to claim 4, wherein controlling, based on the parameter value of the aggregate uplink transmission power and the power control priority, the power at which the UE accesses the at least two systems comprises:
detecting a value of the power at which the UE accesses each of the at least two systems; and
increasing, in an order of the power control priority from high to low, the power at which the UE accesses a preset number of systems having higher priorities, and meanwhile stopping increasing or reducing the power at which the UE accesses other systems rather than the systems having the higher priorities, when a sum of the values of the power at which the UE accesses each of the systems is not less than the parameter value of the aggregate uplink transmission power.

6. A method for power control, comprising:
obtaining, by a network equipment, a parameter value of aggregate uplink transmission power, wherein the parameter value of the aggregate uplink transmission power is a power parameter value of an user equipment UE in a case that the UE accesses at least two systems simultaneously; and
controlling, based on the parameter value of the aggregate uplink transmission power, power at which the UE accesses the at least two systems.

7. The method according to claim 6, wherein obtaining, by network equipment, a parameter value of aggregate uplink transmission power comprises:
obtaining, by the network equipment, at least one of following parameters:
aggregate maximum allowed transmission power which is configured for the UE by the network equipment as a third parameter; and
aggregate maximum output power which is configured by the UE based on uplink maximum output power for accessing each of the systems as a fourth parameter, wherein the aggregate maximum output power is not less than a maximum value of the uplink maximum output power and is not greater than a sum of the uplink maximum output power; and
determining the third parameter as the parameter value of the aggregate uplink transmission power in a case that only the third parameter is obtained; or determining the fourth parameter as the parameter value of the aggregate uplink transmission power in a case that only the fourth parameter is obtained; or selecting a smaller one of the third parameter and the fourth parameter and taking it as the parameter value of the aggregate uplink transmission power in a case that both the third parameter and the fourth parameter are obtained.

8. The method according to claim 6 or 7, wherein controlling, based on the parameter value of the aggregate uplink transmission power, power at which the UE accesses the at least two systems comprises:
receiving a sum of values of the power at which the UE accesses each of the at least two systems, which is sent by the UE; and
stopping increasing the power at which the UE accesses each of the systems when the sum of the values of the power at which the UE accesses each of the at least two systems is not less than the parameter value of the aggregate uplink transmission power.

9. The method according to claim 6 or 7, further comprising:
obtaining, by the network equipment, a power control priority which is configured for different systems by the network equipment or the UE,
wherein controlling, based on the parameter value of the aggregate uplink transmission power, power at which the UE accesses the at least two systems comprises:
controlling, based on the parameter value of the aggregate uplink transmission power and the power control priority, the power at which the UE accesses the at least two systems.

10. The method according to claim 9, wherein controlling, based on the parameter value of the aggregate uplink transmission power and the power control priority, the power at which the UE accesses the at least two systems comprises:
receiving a sum of values of the power at which the UE accesses each of the at least two systems, which is sent by the UE; and
increasing, in an order of the power control priority from high to low, the power at which the UE accesses a preset number of systems having higher priorities and meanwhile stopping increasing or reducing the power at which the UE accesses other systems rather than the systems having the higher priorities, when the sum of the values of the power at which the UE accesses each of the at least two systems is not less than the parameter value of the aggregate uplink transmission power.

11. The method according to claim 6, wherein obtaining, by network equipment, a parameter value of aggregate uplink transmission power comprises:
obtaining, by the network equipment, any one of following transmission power margins:
a first transmission power margin which is sent by the UE and taken by the network equipment as the parameter value of the aggregate uplink transmission power, wherein the first transmission power margin is a difference between aggregate maximum output power configured by the UE and a sum of values of the power at which the UE accesses each of the systems, with the aggregate maximum output power being configured by the UE based on uplink maximum output power for accessing each of the systems, and with the aggregate maximum output power being not less than a maximum value of the uplink maximum output power and not greater than a sum of the uplink maximum output power;
a second transmission power margin which is sent by the UE and taken by the network equipment as the parameter value of the aggregate uplink transmission power, wherein the second transmission power margin is a difference between aggregate maximum allowed transmission power configured for the UE by the network equipment and a sum of values of the power at which the UE accesses each of the systems; and
a third transmission power margin which is sent by the UE and taken by the network equipment as the parameter value of aggregate uplink transmission power, wherein the third transmission power margin is a difference between a smaller one selected from the aggregate maximum output power and the aggregate maximum allowed transmission power by the UE and a sum of values of the power at which the UE accesses each of the systems.

12. The method according to claim 11, wherein controlling, based on the parameter value of the aggregate uplink transmission power, power at which the UE accesses the at least two systems comprises:
stopping increasing the power at which the UE accesses each of the systems when the transmission power margin is not greater than zero.

13. The method according to claim 11, further comprising:
obtaining, by the network equipment, a power control priority which is configured for different systems by the network equipment or the UE,
wherein controlling, based on the parameter value of the aggregate uplink transmission power, power at which the UE accesses the at least two systems comprises:
controlling, based on the transmission power margin and the power control priority, the power at which the UE accesses the at least two systems.

14. The method according to claim 13, wherein controlling, based on the transmission power margin and the power control priority, the power at which the UE accesses the at least two systems comprises:
increasing, in an order of the power control priority from high to low, the power at which the UE accesses a preset number of systems having higher priorities and meanwhile stopping increasing or reducing the power at which the UE accesses other systems rather than the systems having the higher priorities, when the transmission power margin is not greater than zero.

15. The method according to any one of claims 9, 10, 13 and 14, wherein the power control priority comprises at least one of following priorities: a system power control priority, a service power control priority and a frequency point power control priority.

16. An user equipment UE for power control, comprising:
a first obtaining unit, configured to obtain a parameter value of aggregate uplink transmission power, wherein the parameter value of the aggregate uplink transmission power is a power parameter value of the UE in a case that the UE accesses at least two systems simultaneously; and
a first control unit, configured to control, based on the parameter value of the aggregate uplink transmission power, power at which the UE accesses the at least two systems.

17. The UE according to claim 16, wherein the first obtaining unit comprises:
a first parameter obtaining sub-unit, configured to obtain at least one of following parameters:
aggregate maximum output power which is configured by the UE based on uplink maximum output power for accessing each of the systems as a first parameter, wherein the aggregate maximum output power is not less than a maximum value of the uplink maximum output power and is not greater than a sum of the uplink maximum output power; and
aggregate maximum allowed transmission power which is configured for the UE by network equipment as a second parameter; and
a first parameter value determination sub-unit, configured to determine the first parameter as the parameter value of the aggregate uplink transmission power in a case that only the first parameter is obtained by the first parameter obtaining sub-unit; or determine the second parameter as the parameter value of the aggregate uplink transmission power in a case that only the second parameter is obtained by the first parameter obtaining sub-unit; or select a smaller one of the first parameter and the second parameter and take it as the parameter value of the aggregate uplink transmission power in a case that both the first parameter and the second parameter are obtained by the first parameter obtaining sub-unit.

18. The UE according to claim 16 or 17, wherein the first control unit comprises:
a first power value detection sub-unit, configured to detect a value of the power at which the UE accesses each of the at least two systems; and
a first power control sub-unit, configured to stop increasing the power at which the UE accesses each of the systems when a sum of the values of the power at which the UE accesses each of the systems is not less than the parameter value of the aggregate uplink transmission power.

19. The UE according to claim 16 or 17, further comprising:
a priority obtaining unit, configured to obtain a power control priority which is configured for different systems by network equipment or the UE,
wherein the first control unit is configured to control, based on the parameter value of the aggregate uplink transmission power and the power control priority, the power at which the UE accesses the at least two systems, and
the first control unit comprises:
a second power value detection sub-unit, configured to detect a value of the power at which the UE accesses each of the at least two systems; and
a second power control sub-unit, configured to increase, in an order of the power control priority from high to low, the power at which the UE accesses a preset number of systems having higher priorities, and meanwhile stop increasing or reducing the power at which the UE accesses other systems rather than the systems having the higher priorities, when a sum of the values of the power at which the UE accesses each of the systems is not less than the parameter value of the aggregate uplink transmission power.

20. A network equipment for power control, comprising:
a second obtaining unit, configured to obtain a parameter value of aggregate uplink transmission power, wherein the parameter value of the aggregate uplink transmission power is a power parameter value of an user equipment UE in a case that the UE accesses at least two systems simultaneously; and
a second control unit, configured to control, based on the parameter value of the aggregate uplink transmission power, power at which the UE accesses the at least two systems.

21. The network equipment according to claim 20, wherein the second obtaining unit comprises:
a second parameter obtaining sub-unit, configured to obtain at least one of following parameters:
aggregate maximum allowed transmission power which is configured for the UE by the network equipment as a third parameter; and
aggregate maximum output power which is configured by the UE based on uplink maximum output power for accessing each of the systems as a fourth parameter, wherein the aggregate maximum output power is not less than a maximum value of the uplink maximum output power and is not greater than a sum of the uplink maximum output power; and
a second parameter value determination sub-unit, configured to determine the third parameter as the parameter value of the aggregate uplink transmission power in a case that only the third parameter is obtained by the second parameter obtaining sub-unit; or determine the fourth parameter as the parameter value of the aggregate uplink transmission power in a case that only the fourth parameter is obtained by the second parameter obtaining sub-unit; or select a smaller one of the third parameter and the fourth parameter and take it as the parameter value of the aggregate uplink transmission power in a case that both the third parameter and the fourth parameter are obtained by the second parameter obtaining sub-unit.

22. The network equipment according to claim 20 or 21, wherein the second control unit comprises:
a first power value sum reception sub-unit, configured to receive a sum of values of the power at which the UE accesses each of the at least two systems which is sent by the UE; and
a third power control sub-unit, configured to stop increasing the power at which the UE accesses each of the systems when the sum of the values of the power at which the UE accesses each of the at least two systems is not less than the parameter value of the aggregate uplink transmission power.

23. The network equipment according to claim 20 or 21, further comprising:
a first priority obtaining unit, configured to obtain a power control priority which is configured for different systems by the network equipment or the UE,
wherein the second control unit is configured to control, based on the parameter value of the aggregate uplink transmission power and the power control priority, the power at which the UE accesses the at least two systems, and
the second control unit comprises:
a second power value sum reception sub-unit, configured to receive a sum of values of power at which the UE accesses each of the at least two systems which is sent by the UE; and
a fourth power control sub-unit, configured to increase, in an order of the power control priority from high to low, the power at which the UE accesses a preset number of systems having higher priorities, and meanwhile stop increasing or reduce the power at which the UE accesses other systems rather than the systems having the higher priorities, when the sum of the values of the power at which the UE accesses each of the at least two systems is not less than the parameter value of the aggregate uplink transmission power.

24. The network equipment according to claim 20, wherein the second obtaining unit comprises:
a transmission power margin obtaining sub-unit, configured to obtain any one of following transmission power margins:
a first transmission power margin which is sent by the UE and taken as the parameter value of the aggregate uplink transmission power, wherein the first transmission power margin is a difference between aggregate maximum output power configured by the UE and a sum of values of the power at which the UE accesses each of the systems, with the aggregate maximum output power being configured by the UE based on uplink maximum output power for accessing each of the systems, and with the aggregate maximum output power being not less than a maximum value of the uplink maximum output power and not greater than a sum of the uplink maximum output power;
a second transmission power margin which is sent by the UE and taken as the parameter value of the aggregate uplink transmission power, wherein the second transmission power margin is a difference between aggregate maximum allowed transmission power configured for the UE by the network equipment and a sum of values of the power at which the UE accesses each of the systems; and
a third transmission power margin which is sent by the UE and taken the parameter value of aggregate uplink transmission power, wherein the third transmission power margin is a difference between a smaller one selected from the aggregate maximum output power and the aggregate maximum allowed transmission power by the UE and a sum of values of the power at which the UE accesses each of the systems.

25. The network equipment according to claim 24, wherein the second control unit comprises:
a fifth power control sub-unit, configured to stop increasing the power at which the UE accesses each of the systems when the transmission power margin is not greater than zero.

26. The network equipment according to claim 24, further comprising:
a second priority obtaining unit, configured to obtain a power control priority which is configured for different systems by the network equipment or the UE,
wherein the second control unit is configured to control, based on the transmission power margin and the power control priority, the power at which the UE accesses the at least two systems, and
the second control unit comprises:
a sixth power control sub-unit, configured to increase, in an order of the power control priority from high to low, the power at which the UE accesses a preset number of systems having higher priorities and meanwhile stop increasing or reduce the power at which the UE accesses other systems rather than the systems having the higher priorities, when the transmission power margin is not greater than zero.
